# EUROPÄISCHE PATENTSCHRIFT

(11) **EP 1 426 684 B1**
(45) Veröffentlichungstag und Bekanntmachung des Hinweises auf die Patenterteilung: **07.07.2010**
(21) Anmeldenummer: 03450058.7
(22) Anmeldetag: 28.02.2003
(51) Int. Cl.: F23K 3/02, B65G 53/08

(54) **Einrichtung zum Aufnehmen bzw. Aufbewahren und zum Entnehmen von festem, rieselfähigem Heizmaterial**
Device for receiving resp. storing and picking a solid or pourable fuel
Dispositif pour recevoir resp. stocker et prendre un carburant solide ou coulant

(30) Priorität: 06.03.2002 AT 1402002; 07.05.2002 DE 20207200 U
(43) Veröffentlichungstag der Anmeldung: 09.06.2004
(73) Patentinhaber: Friedrich Schöls, 2604 Theresienfeld (AT)
(72) Erfinder: Schöls, Friedrich, 3753 Dallein (AT); Ehrenhöfer, Hannes, 2873 Feistritz am Wechsel (AT)
(74) Vertreter: Miksovsky, Alexander

(56) Entgegenhaltungen:
- EP-A- 0 060 137
- EP-A- 0 264 943
- DE-A- 3 228 468
- DE-A- 3 507 040
- US-A- 4 311 102

## Beschreibung

Die vorliegende Erfindung bezieht sich auf eine Einrichtung zum Aufnehmen bzw. Aufbewahren und zum Entnehmen von festem, rieselfähigem Heizmaterial, insbesondere Pellets aus Holz, mit einem Vorratsbehälter für das Heizmaterial und einer am bzw. im Vorratsbehälter vorgesehenen Entnahmevorrichtung für das Heizmaterial, welche wenigstens eine Ausbringleitung, insbesondere eine Saugleitung, für ein Ausbringen und Fördern des Heizmaterials aus dem Vorratsbehälter zu einem Zwischenbehälter oder einer Heizvorrichtung und wenigstens eine Zufuhröffnung für ein Einbringen des Heizmaterials in den Vorratsbehälter aufweist.

Im Zusammenhang mit Heizanlagen, welche mit festem, rieselfähigem Heizmaterial betrieben werden, ist es beispielsweise bekannt, unmittelbar neben der Heizanlage einen Vorratsraum vorzusehen, in welchem derartiges Heizmaterial, beispielsweise Pellets aus Holz, gesammelt werden. Die Zufuhr des Heizmaterials zu der Heizanlage bzw. einem Kessel einer derartigen Heizanlage erfolgt beispielsweise über eine Saugleitung, wie dies unter anderem der AT-U 3734, der AT-B 405 875 oder der EP-A 1 052 456 zu entnehmen ist. Nachteilig bei diesen bekannten Heizanlagen ist insbesondere die Tatsache, daß beispielsweise in einem Keller ein getrennter Raum für die Aufbewahrung bzw. Aufnahme des Heizmaterials vorzusehen ist und daß mit derartigen Saugleitungen ein ordnungsgemäßes Dosieren des Heizmaterials nicht ohne weiteres möglich ist.

Darüber hinaus ist es bekannt, aus derartigen Vorratslagern über üblicherweise eine große Länge aufweisenden Schnecken das Heizmaterial aus einem Vorratsraum zu einer Heizanlage bzw. zu einem Zwischenbehälter einer derartigen Heizanlage zu transportieren, wie dies unter anderem der DE-3228468-A zu entnehmen ist. Nachteilig bei derartigen Ausführungsformen ist die Tatsache, daß sich derartige Schneckenförderanlagen zumeist über eine sehr große Länge erstrecken, wodurch ein überaus großer mechanischer Aufwand für derartige Schneckenförderanlagen erforderlich ist.

Darüber hinaus ist es bekannt, Vorratsbehälter vorzusehen, welche für eine Aufnahme des Heizmaterials dienen, wobei das Heizmaterial aus derartigen Vorratsbehältern wiederum über eine Saugleitung entnommen wird, wobei mit derartigen Saugförderanlagen die oben bereits erwähnten Nachteile verbunden sind.

Die vorliegende Erfindung zielt darauf ab, eine Einrichtung der eingangs genannten Art dahingehend weiterzubilden, daß bei Vorsehen eines getrennten Vorratsbehälters ein zuverlässiges Entnehmen und insbesondere Dosieren des Heizmaterials ermöglicht wird, um dadurch die Steuerung der Zufuhrmenge des Heizmaterials entsprechend zu vereinfachen. Zur Lösung dieser Aufgaben ist eine Einrichtung der eingangs genannten Art im wesentlichen dadurch gekennzeichnet, daß einer im Inneren des Vorratsbehälters angeordneten Aufnahmeöffnung der Saugleitung eine Schnecke zum Fördern bzw. Dosieren des Heizmaterials zu der Aufnahmeöffnung vorgeschaltet ist. Dadurch, daß erfindungsgemäß der Saugleitung eine Schnecke zum Fördern bzw. Dosieren des Heizmaterials vorgeschaltet ist, ist es möglich, durch einfache Steuerung des Antriebs bzw. der Fördergeschwindigkeit und somit der Fördermenge der Schnecke das der nachgeschalteten Heizanlage zuzuführende Heizmaterial entsprechend den Anforderungen genau zu dosieren. Es läßt sich somit mit einer einfachen, insbesondere kurzbauenden und im Inneren des Vorratsbehälters angeordneten Schnecke das Auslangen finden, welche gegenüber bekannten Schneckenförderanlagen, welche eine überaus große Erstreckung aufweisen mußten, um Heizmaterial aus dem Vorratsraum bis zu der Heizanlage zu befördern, eine vereinfachte, mechanische Konstruktion aufweist. Erfindungsgemäß ist vorgesehen, daß an eine derartige insbesondere kurzbauende Schnecke eine Saugleitung anschließt, um nach erfolgter Dosierung des Heizmaterials durch die Schnecke eine einfache Zufuhr des Heizmaterials zu der nachgeschalteten Heizvorrichtung bzw. zu einem Zwischenbehälter der Heizvorrichtung zu ermöglichen.

Für eine besonders einfache Anordnung der Schnecke im Inneren des Vorratsbehälters ist gemäß einer weiters bevorzugten Ausführungsform vorgesehen, daß die Schnecke wenigstens teilweise von einem in das Innere des Vorratsbehälters eintauchenden Führungsrohr umgeben ist. Dadurch, daß die Schnecke wenigstens teilweise von einem Führungsrohr umgeben ist, läßt sich die Dosiergenauigkeit weiter in Kenntnis der Abmessungen der Schnecke und der damit verbundenen Fördermenge durch den Bereich des Führungsrohrs verbessern.

Für eine ordnungsgemäße Aufnahme von Heizmaterial durch die Schnecke ist darüber hinaus gemäß einer weiters bevorzugten Ausführungsform vorgesehen, daß die Schnecke über einen Teilbereich ihrer Länge, beispielsweise wenigstens ein Drittel ihrer Länge, aus dem Führungsrohr in das Innere des Vorratsbehälters vorragt. Durch den aus dem Führungsrohr vorragenden Bereich wird eine zuverlässige Aufnahme des Heizmaterials aus dem Inneren des Vorratsbehälters sichergestellt, worauf das Heizmaterial durch die Schnecke in den vom Führungsrohr umgebenen Teilbereich der Schnecke gelangt und in weiterer Folge durch die Saugleitung ausgebracht wird.

Für eine besonders einfache und zuverlässige Lagerung der Antriebselemente für die Schnecke ist gemäß einer weiters bevorzugten Ausführungsform vorgesehen, daß ein Antrieb bzw. eine Welle für die Schnecke durch das Führungsrohr geführt ist und ein Motor zum Antreiben der Schnecke außerhalb des Vorratsbehälters angeordnet ist.

Für eine zuverlässige Übergabe des Heizmaterials von der Schnecke in die Saugleitung bzw. Saugförderanlage wird darüber hinaus vorgeschlagen, daß die Aufnahmeöffnung der Saugleitung an das Führungsrohr angeschlossen ist und eine Aufnahme des Heizmaterials unmittelbar an dem im Führungsrohr angeordneten Ende der Schnecke in die Saugleitung erfolgt, wie dies einer weiters bevorzugten Ausführungsform der erfindungsgemäßen Einrichtung entspricht.

Zur Unterstützung des Abtransports des von der Schnecke dosierten Heizmaterials durch die Saugleitung wird gemäß einer weiters bevorzugten Ausführungsform vorgeschlagen, daß im Bereich der Aufnahmeöffnung der Saugleitung eine Luftzufuhröffnung zur Übergabe und Mitnahme von Heizmaterial von der Schnecke in die Aufnahmeöffnung der Saugleitung mündet.

Insbesondere zur Ermöglichung einer vollständigen Entleerung des Behälters wird gemäß einer weiters bevorzugten Ausführungsform vorgeschlagen, daß die Schnecke verstellbar, insbesondere höhenverstellbar, in der Saugleitung und/oder dem Führungsrohr gelagert ist. Neben einer zuverlässigen bzw. vollständigen Restentleerung durch die erfindungsgemäß vorgeschlagene Verstellbarkeit bzw. Höhenverstellbarkeit der Schnecke läßt sich auch eine gezielte Anpassung der Position der Schnecke für ein Ausbringen des Heizmaterials erzielen.

Zur Erzielung eines Rüttel- bzw. Auflockerungseffekts insbesondere im Bereich der Entnahme des Heizmaterials aus dem Behälter durch die Schnecke wird gemäß einer weiters bevorzugten Ausführungsform vorgeschlagen, daß die Schnecke beweglich mit der Saugleitung und/oder dem Führungsrohr gekoppelt ist. Die Schnecke kann hiebei in einfacher Weise in einem beweglichen Rohrstück wenigstens teilweise gelagert sein, welches entsprechend beweglich mit der Saugleitung bzw. dem Führungsrohr verschraubt ist, so daß sich bei einer Betätigung der Schnecke der gewünschte Rüttel- bzw. Auflockerungseffekt ergibt.

Für eine konstruktiv besonders einfache Ausgestaltung und zur sicheren Festlegung der Saugleitung und/oder der Luftzufuhrleitung wird darüber hinaus vorgeschlagen, daß die Saugleitung und gegebenenfalls die Leitung zum Zuführen von Luft in dem Bereich der Aufnahmeöffnung der Saugleitung am Führungsrohr angelenkt bzw. festgelegt sind, wie dies einer weiters bevorzugten Ausführungsform der erfindungsgemäßen Einrichtung entspricht.

Für eine einfache Wartung und gegebenenfalls einen Ersatz von schadhaften Elementen der erfindungsgemäßen Einrichtung und insbesondere der Entnahmevorrichtung, ist gemäß einer weiters bevorzugten Ausführungsform vorgesehen, daß die Entnahmevorrichtung, umfassend die Saugleitung, die Schnecke sowie die Luftzufuhrleitung, lösbar bzw. entfernbar insbesondere in einem mittigen Bereich der oberen Deckfläche des Behälters angeordnet bzw. festgelegt ist, wobei zur weiteren Vereinfachung der konstruktiven Ausgestaltung darüber hinaus bevorzugt vorgesehen ist, daß die Festlegung der Entnahmevorrichtung am Behälter über einen plattenförmigen Deckel des Behälters erfolgt, welcher darüber hinaus wenigstens eine Befüll- bzw. Beschickungsöffnung zum Einbringen von Heizmaterial in den Vorratsbehälter aufweist.

Um in einem gegebenenfalls großvolumigen Vorratsbehälter zu vermeiden, daß lediglich aus Teilbereichen des Behälters bevorzugt Heizmaterial entnommen wird, während aus anderen Teilbereichen eine Entnahme seltener trotz der durch die Förderschnecke eingebrachten Bewegung in das Heizmaterial entnommen wird, ist gemäß einer weiters bevorzugten Ausführungsform vorgesehen, daß der Vorratsbehälter in seinem Bodenbereich insbesondere plattenförmige Einbauten aufweist, welche sich ausgehend von äußeren Umfangswandbereichen trichterartig bzw. kegelstumpfförmig im wesentlichen zum Zentrum des Bodens des Behälters verjüngen. Derartige beispielsweise plattenförmige Einbauten im Bodenbereich stellen sicher, daß sich Heizmaterial unter seinem Eigengewicht in den Bereich der trichterförmigen bzw. kegelstumpfartigen Verjüngung des Bogens bewegt, wobei gemäß einer weiters bevorzugten Ausführungsform vorgesehen ist, daß die Schnecke im Bereich des vertieften Zentrums, insbesondere einem Sumpf, des Bodens des Vorratsbehälters angeordnet ist, so daß zusätzlich sichergestellt wird, daß im Bereich der Sammelstelle für das Heizmaterial aufgrund der vorgeschlagenen, bevorzugten Formgebung zumindest des Bodenbereichs des Vorratsbehälters das Heizmaterial entnommen werden kann.

Gemäß einer weiters bevorzugten Ausführungsform ist vorgesehen, daß der Vorratsbehälter in an sich bekannter Weise aus Kunststoff ausgebildet ist, so daß sich entsprechend kostengünstig widerstandsfähige und robuste Vorratsbehälter herstellen lassen, welche auch zur Aufnahme großer Mengen von Heizmaterial geeignet sind.

Zur Erhöhung der Festigkeit des Behälters wird gemäß einer bevorzugten Ausführungsform vorgeschlagen, daß der Vorratsbehälter im Inneren mit einer Versteifung ausgebildet ist.

Um wertvollen Raum insbesondere innerhalb eines Gebäudes nicht für eine Aufnahme einer gegebenenfalls großen Menge von Heizmaterial zur Verfügung zu stellen zu müssen, wird gemäß einer weiters bevorzugten Ausführungsform vorgeschlagen, daß der Vorratsbehälter in an sich bekannter Weise ein im Erdreich aufnehmbarer Behälter ist. Derartige im Erdreich vorzusehende Vorratsbehälter können auch entsprechend außerhalb eines Gebäudes vorgesehen sein, wobei lediglich Sorge getragen werden muß, daß eine einfache und kleinbauende Saugleitung bzw. Saugförderanlage und gegebenenfalls eine zusätzliche Luftzufuhrleitung in das Innere des Vorratsbehälters durch einfache Durchtrittsöffnungen in einer Gebäudewand geführt werden müssen, während beispielsweise der Antriebsmotor für die Schnecke in einfacher Weise in einem Schacht im Bereich des Vorratsbehälters aufgenommen und vorgesehen werden kann, wobei unter Berücksichtigung der Tatsache, daß lediglich eine kleinbauende Schnecke Verwendung findet, auch mit einem entsprechend kleinbauenden Antriebsaggregat das Auslangen gefunden werden kann.

Die Erfindung wird nachfolgend anhand von in der beiliegenden Zeichnung schematisch dargestellten Ausführungsbeispielen näher erläutert. In dieser zeigen:
Fig. 1 eine Seitenansicht, teilweise im Schnitt, einer erfindungsgemäßen Einrichtung zum Aufnehmen bzw. Aufbewahrung und zum Entnehmen von Heizmaterial mit einem Vorratsbehälter und einer Entnahmevorrichtung;
Fig. 2 in vergrößerter Darstellung eine schematische Seitenansicht der Entnahmevorrichtung gemäß Fig. 1;
Fig. 3 in einer zu Fig. 2 ähnlichen Darstellung eine abgewandelte Ausführungsform einer Entnahmevorrichtung;
Fig. 4 eine perspektivische Ansicht auf den Bodenbereich eines Vorratsbehälters einer erfindungsgemäßen Einrichtung;
Fig. 5 eine perspektivische Ansicht, teilweise im Schnitt, einer abgewandelten Ausführungsform eines Vorratsbehälters einer erfindungsgemäßen Einrichtung;
Fig. 6 eine weitere abgewandelte Ausführungsform einer Entnahmevorrichtung einer erfindungsgemäßen Einrichtung, wobei
Fig. 6a in einer zu Fig. 2 ähnlichen Darstellung eine Teilansicht der Entnahmevorrichtung zeigt, Fig. 6b in vergrößertem Maßstab das Detail II der Fig. 6a betreffend die Lagerung der Schnecke zeigt und Fig. 6c in nochmals vergrößertem Maßstab die Lagerung der beweglichen Schnecke über ein bewegliches Rohrstück zeigt; und
Fig. 7 in einer zu Fig. 6b ähnlichen Darstellung ein Detail einer weiteren abgewandelten Ausführungsform einer höhenverstellbaren Schnecke einer erfindungsgemäßen Einrichtung.

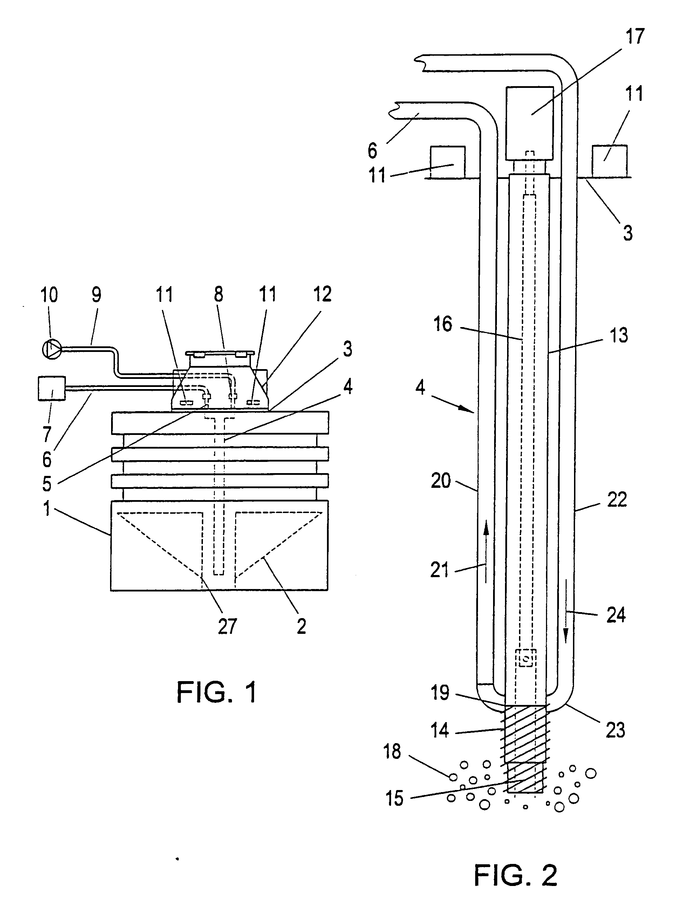

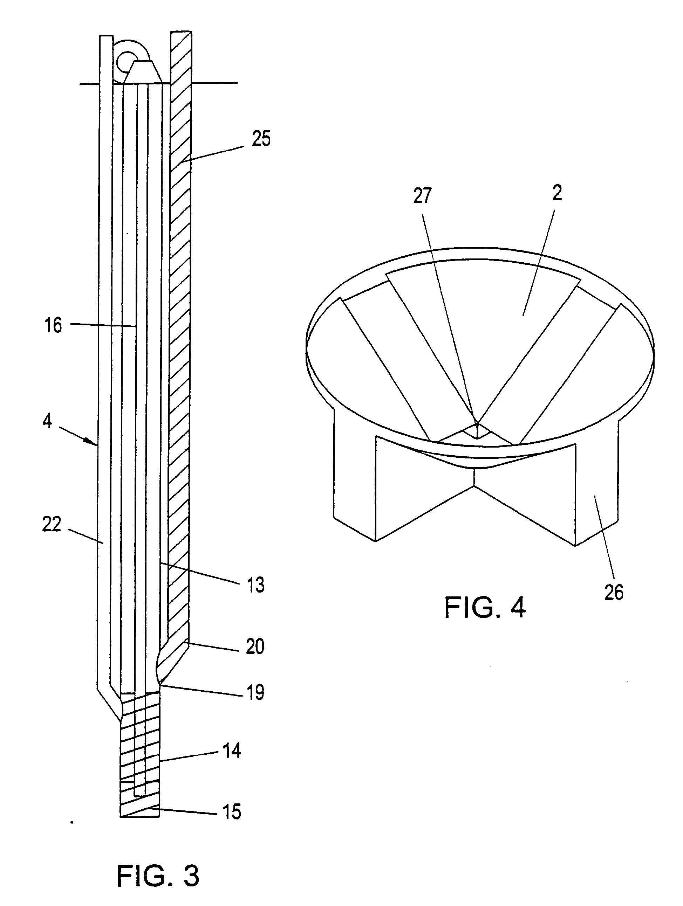

In Fig. 1 ist mit 1 allgemein ein beispielsweise aus Kunststoff gefertigter Vorratsbehälter bezeichnet, welcher, wie dies in Fig. 4 noch detaillierter gezeigt werden wird, in seinem Bodenbereich mit insbesondere plattenförmigen Einbauten 2 versehen ist, wodurch ein nicht näher dargestelltes, im Inneren des Vorratsbehälters 1 befindliches, festes und rieselfähiges Heizmaterial, insbesondere Pellets aus Holz, in den Bereich der Bodenmitte 27 des Behälters 1 gelangt.

An einem insbesondere abnehmbaren, plattenförmigen Deckel 3 des Vorratsbehälters 1 ist eine in Fig. 2 im Detail gezeigte und allgemein mit 4 bezeichnete Entnahmevorrichtung gelagert, wobei an der Entnahmevorrichtung 4 bzw. am Deckel 3 ein Anschluß 5 für einen Abtransport von rieselfähigem Heizmaterial aus dem Inneren des Vorratsbehälters 1 über eine schematisch angedeutete Leitung 6 zu einer Heizung bzw. einem Zwischenbehälter für eine Heizung 7 vorgesehen ist. Darüber hinaus ist über einen Anschluß 8 eine Zufuhrleitung 9 angeschlossen, über welche vorzugsweise über ein Gebläse bzw. eine Pumpe 10 Luft über die bzw. in die Entnahmevorrichtung 4 eingebracht wird, wie dies nachfolgend noch näher im Detail erörtert werden wird.

Bei dem in Fig. 1 gezeigten Vorratsbehälter 1 handelt es sich beispielsweise um einen im Erdreich aufnehmbaren Behälter, so daß an dem Deckel 3 mit 11 angedeutete Befüllstutzen über einen schematisch mit 12 angedeuteten Schacht zugänglich sind.

Bei der detaillierten Darstellung gemäß Fig. 2 der wiederum mit 4 bezeichneten Entnahmevorrichtung ist ersichtlich, daß die Entnahmevorrichtung 4 ein Führungsrohr 13, welches am Deckel bzw. der Abdeckung 3 angeschlossen ist, enthält, wobei aus dem vom Deckel 3 abgewandten Ende 14 des Führungsrohrs 13 eine Förderschnecke 15 vorragt, welche über einen schematisch mit 16 angedeuteten Antrieb bzw. eine Welle, welche(r) im Inneren des Führungsrohrs 13 geführt ist, über einen ebenfalls schematisch mit 17 angedeuteten Motor zu einer Drehbewegung angetrieben wird.

Wie aus Fig. 2 ersichtlich, ragt ein Teilbereich der Förderschnecke 15 aus dem im Inneren des in Fig. 2 nicht näher dargestellten Vorratsbehälters vorgesehenen Ende 14 des Führungsrohrs 13 vor, so daß bei einer Drehbewegung der Förderschnecke 15 schematisch mit 18 angedeutetes, rieselfähiges Heizmaterial, insbesondere Holzpellets, aufgenommen wird und in den Bereich einer Aufnahmeöffnung 19 einer Saugleitung 20 gefördert wird, durch welche entsprechend dem Pfeil 21 das Heizmaterial aus dem Inneren des Behälters 1 abtransportiert wird. Die Verbindungsleitung zu der nachgeschalteten Heizung bzw. einem Zwischenbehälter der Heizung ist wiederum mit 6 bezeichnet.

Zur Unterstützung des Abtransports durch die Saugleitung 20 ist in Fig. 2 weiters angedeutet, daß sich eine Luftzufuhrleitung 22 in den Bereich der Übergabe des Heizmaterials von der Förderschnecke 15 in die Aufnahmeöffnung 19 ebenfalls beim bzw. im Führungsrohr 13 mündet, wobei die Lufteinbringöffnung mit 23 und die Luftzufuhrrichtung mit 24 angedeutet ist.

Durch entsprechenden Antrieb der Förderschnecke 15 läßt sich somit bei bekannten Abmessungen der Förderschnecke 15 eine zuverlässige Dosierung des Heizmaterials zur Entnahme aus dem Inneren des Vorratsbehälters 1 erzielen.

In Fig. 3 ist eine abgewandelte Ausführungsform einer wiederum allgemein mit 4 bezeichneten Entnahmevorrichtung dargestellt, wobei wiederum in dem Führungsrohr 13 ein Gestänge bzw. eine Welle 16 für die Schnecke 15 gelagert ist, welche(s) wiederum über einen Teilbereich ihrer Länge, beispielsweise etwa ein Drittel, aus dem vorderen Ende 14 des Führungsrohrs 13 vorragt.

Über die Schnecke 15 wird nicht näher dargestelltes Heizmaterial aus dem Inneren des Behälters gefördert und dosiert und gelangt in die wiederum mit 20 bezeichnete Saugleitung, in welcher schraffiert das abzutransportierende Heizmaterial 25 angedeutet ist.

Bei der Ausbildung gemäß Fig. 3 erfolgt eine Zufuhr von Luft über die Leitung 22 in den Bereich des zur Aufnahmeöffnung 19 gewandten Endes der Schnecke 5.

Neben einer Unterstützung des Abtransports des Heizmaterials durch die Saugleitung 20 dient die Zufuhr von Luft über die Leitung 22 insbesondere für einen Druckausgleich im Inneren des Behälters, um nicht durch Entnahme von Heizmaterial über die Saugleitung 20 einen übermäßigen Unterdruck im Behälter 1 zu bewirken.

In Fig. 4 ist schematisch der Bodenbereich 26 des Vorratsbehälters 1 dargestellt, wobei ersichtlich ist, daß plattenförmige Einbauten 2 insgesamt einen im wesentlichen trichterartigen bzw. kegelstumpfförmigen Bodenbereich ausbilden, in dessen Zentrum 27 insbesondere die nicht näher dargestellte Schnecke 15 für eine ordnungsgemäße Entnahme bzw. Entleerung des Inhalts des Behälters 1 mündet, wie dies schematisch in Fig. 1 angedeutet ist.

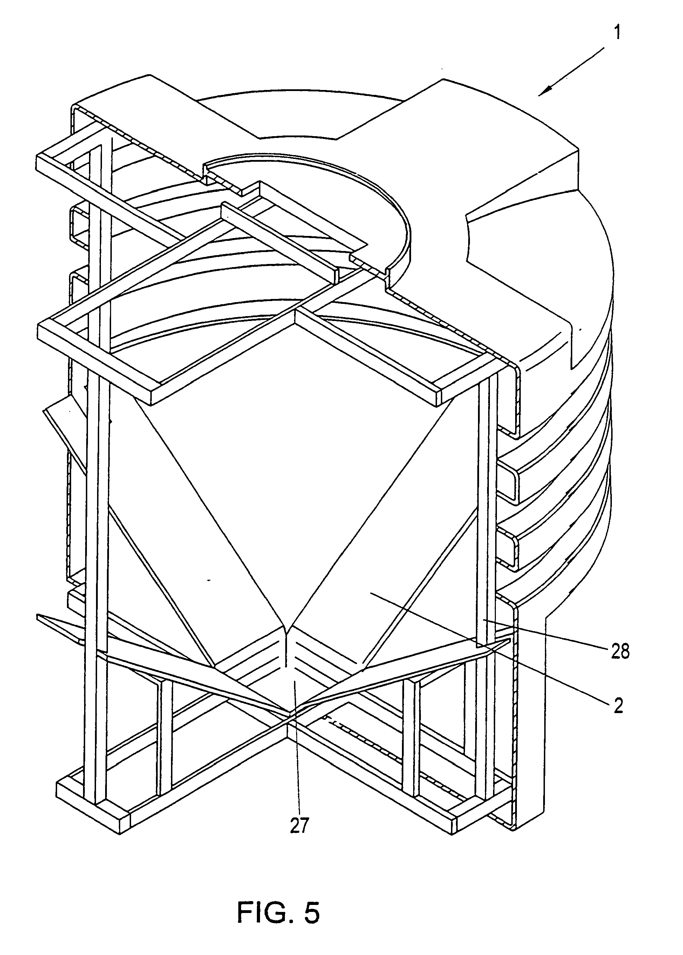

In Fig. 5 ist eine abgewandelte Ausführungsform eines Vorratsbehälters 1 dargestellt, welcher neben plattenförmigen Einbauten 2 zur Erhöhung der Festigkeit bzw. Steifigkeit des Behälters im Inneren mit einer Innenversteifung 28 bzw. entsprechenden Verstrebungen versehen ist. Darüber hinaus ist im Bereich der trichterartigen bzw. kegelstumpfförmigen Verjüngung das Zentrum 27 des Bodens als Sumpf ausgebildet, wobei in diesem Sumpf 27 die in Fig. 5 nicht näher dargestellte Entnahmeschnecke angeordnet wird.

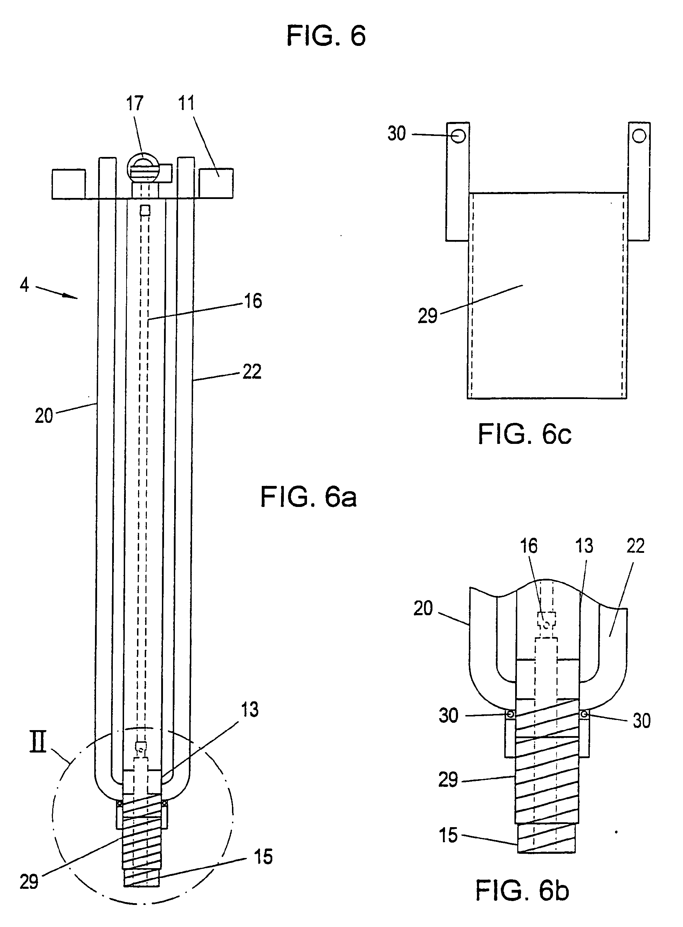

In Fig. 6 ist eine weitere abgewandelte Ausführungsform der Entnahmevorrichtung 4 ersichtlich, wobei die Förderschnecke 15 zur Aufnahme von rieselfähigem Heizmaterial, insbesondere Holzpellets, in einem beweglichen Rohrstück 29 gelagert ist, welches über schematisch angedeutete Verschraubungen 30 beweglich mit dem Führungsrohr 13 verbunden ist. Durch die bewegliche Lagerung der Schnecke 15 ergibt sich bei Antreiben der Schnecke 15 durch die Bewegung bzw. Vibration ein entsprechender Rütteleffekt auf das umgebende, rieselfähige Heizmaterial, so daß eine teilweise Auflockerung und zuverlässige Entnahme sichergestellt werden kann.

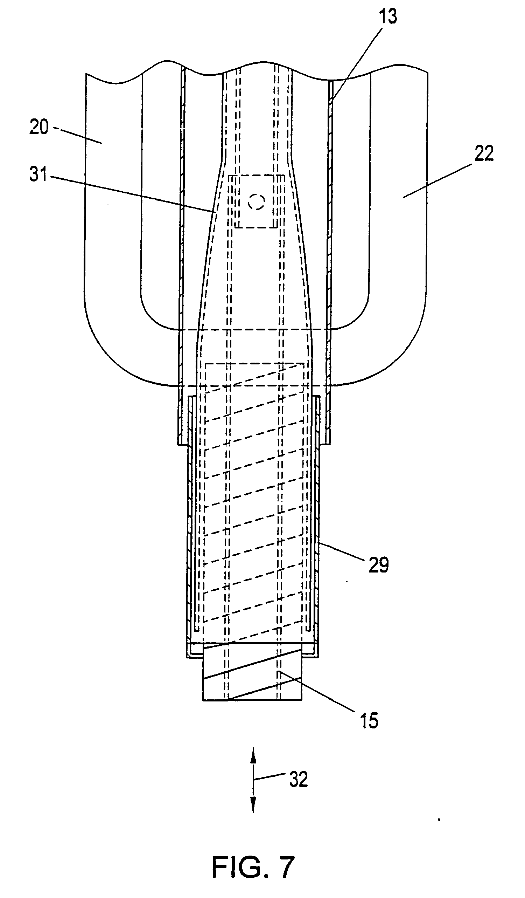

Bei der in Fig. 7 dargestellten, weiter abgewandelten Ausführungsform ist ersichtlich, daß die Schnecke 15 wenigstens teilweise in einem starren Teil 31 gelagert ist, wobei durch eine Höhenverstellbarkeit des starren Teils bzw. Rohrs 31 gemeinsam mit der Schnecke 15 relativ zu dem Führungsrohr 13 und/oder einem wiederum vorgesehenen Rohrteil 29 eine vollständige Restentleerung durch eine Verstellung der Schnecke 15 gemeinsam mit dem starren Teil 31 entlang des Doppelpfeils 32 möglich wird. Neben der Möglichkeit einer vollständigen Entleerung läßt sich durch die Höhenverstellbarkeit der Schnecke 15 entsprechend dem Doppelpfeil 36 auch eine Anpassung an gegebenenfalls variierende Entnahmebedingungen aus dem Inneren des nicht näher dargestellten Behälters erzielen.

## Patentansprüche

1. Einrichtung zum Aufnehmen bzw. Aufbewahren und zum Entnehmen von festem, rieselfähigem Heizmaterial, insbesondere Pellets aus Holz, mit einem Vorratsbehälter (1) für das Heizmaterial und einer am bzw. im Vorratsbehälter (1) vorgesehenen Entnahmevorrichtung (4) für das Heizmaterial, welche wenigstens eine Ausbringleitung (20), insbesondere eine Saugleitung, für ein Ausbringen und Fördern des Heizmaterials aus dem Vorratsbehälter (1) zu einem Zwischenbehälter oder einer Heizvorrichtung und wenigstens eine Zufuhröffnung (11) für ein Einbringen des Heizmaterials in den Vorratsbehälter (1) aufweist, **dadurch gekennzeichnet, daß** einer im Inneren des Vorratsbehälters (1) angeordneten Aufnahmeöffnung (19) der Saugleitung (20) eine Schnecke (15) zum Fördern bzw. Dosieren des Heizmaterials zu der Aufnahmeöffnung (19) vorgeschaltet ist.

2. Einrichtung nach Anspruch 1, **dadurch gekennzeichnet, daß** die Schnecke (15) wenigstens teilweise von einem in das Innere des Vorratsbehälters (1) eintauchenden Führungsrohr (13) umgeben ist.

3. Einrichtung nach Anspruch 2, **dadurch gekennzeichnet, daß** die Schnecke (15) über einen Teilbereich ihrer Länge, beispielsweise wenigstens ein Drittel ihrer Länge, aus dem Führungsrohr (13) in das Innere des Vorratsbehälters (1) vorragt.

4. Einrichtung nach Anspruch 2 oder 3, **dadurch gekennzeichnet, daß** ein Antrieb bzw. eine Welle (16) für die Schnecke (15) durch das Führungsrohr (13) geführt ist und ein Motor (17) zum Antreiben der Schnecke (15) außerhalb des Vorratsbehälters (1) angeordnet ist.

5. Einrichtung nach einem der Ansprüche 2 bis 4, **dadurch gekennzeichnet, daß** die Aufnahmeöffnung (19) der Saugleitung (20) an das Führungsrohr (13) angeschlossen ist und eine Aufnahme des Heizmaterials unmittelbar an dem im Führungsrohr (13) angeordneten Ende der Schnecke (15) in die Saugleitung (20) erfolgt.

6. Einrichtung nach Anspruch 5, **dadurch gekennzeichnet, daß** im Bereich der Aufnahmeöffnung (19) der Saugleitung (20) eine Luftzufuhröffnung (23) zur Übergabe und Mitnahme von Heizmaterial von der Schnecke (15) in die Aufnahmeöffnung (19) der Saugleitung (20) mündet.

7. Einrichtung nach einem der Ansprüche 1 bis 6, **dadurch gekennzeichnet, daß** die Schnecke (15) verstellbar, insbesondere höhenverstellbar, an der Saugleitung (20) und/oder dem Führungsrohr (13) gelagert ist.

8. Einrichtung nach einem der Ansprüche 1 bis 7, **dadurch gekennzeichnet, daß** die Schnecke (15) beweglich mit der Saugleitung (20) und/oder dem Führungsrohr (13) gekoppelt ist.

9. Einrichtung nach einem der Ansprüche 2 bis 8, **dadurch gekennzeichnet, daß** die Saugleitung (20) und gegebenenfalls die Leitung (22) zum Zuführen von Luft in dem Bereich der Aufnahmeöffnung (19) der Saugleitung (20) am Führungsrohr (13) angelenkt bzw. festgelegt sind.

10. Einrichtung nach einem der Ansprüche 1 bis 9, **dadurch gekennzeichnet, daß** die Entnahmevorrichtung (4), umfassend die Saugleitung (20), die Schnecke (15) sowie die Luftzufuhrleitung (22), lösbar bzw. entfernbar insbesondere in einem mittigen Bereich der oberen Deckfläche des Behälters (1) angeordnet bzw. festgelegt ist.

11. Einrichtung nach Anspruch 10, **dadurch gekennzeichnet, daß** die Festlegung der Entnahmevorrichtung (4) am Behälter (1) über einen plattenförmigen Deckel (3) des Behälters (1) erfolgt, welcher darüber hinaus wenigstens eine Befüll- bzw. Beschickungsöffnung (11) zum Einbringen von Heizmaterial in den Vorratsbehälter (1) aufweist.

12. Einrichtung nach einem der Ansprüche 1 bis 11, **dadurch gekennzeichnet, daß** der Vorratsbehälter (1) in seinem Bodenbereich insbesondere plattenförmige Einbauten (2) aufweist, welche sich ausgehend von äußeren Umfangswandbereichen trichterartig bzw. kegelstumpfförmig im wesentlichen zum Zentrum (27) des Bodens des Behälters (1) verjüngen.

13. Einrichtung nach Anspruch 12, **dadurch gekennzeichnet, daß** die Schnecke (15) im Bereich des vertieften Zentrums (27), insbesondere einem Sumpf, des Bodens des Vorratsbehälters (1) angeordnet ist.

14. Einrichtung nach einem der Ansprüche 1 bis 13, **dadurch gekennzeichnet, daß** der Vorratsbehälter (1) in an sich bekannter Weise aus Kunststoff ausgebildet ist.

15. Einrichtung nach einem der Ansprüche 1 bis 14, **dadurch gekennzeichnet, daß** der Vorratsbehälter (1) im Inneren mit einer Versteifung ausgebildet ist.

16. Einrichtung nach einem der Ansprüche 1 bis 15, **dadurch gekennzeichnet, daß** der Vorratsbehälter (1) in an sich bekannter Weise ein im Erdreich aufnehmbarer Behälter ist.

## Claims

1. A device for receiving resp. storing and picking a solid, pourable fuel, particularly wood pellets, including a fuel storage container (1) and a fuel extraction device (4) provided on or in the storage container (1) and including at least one discharge duct (20), particularly a suction duct, for discharging and conveying the fuel from the storage container (1) to an intermediate container or a heating device, and at least one supply opening (11) for introducing the fuel into the storage container (1), **characterized in that** a reception opening (19) of the suction duct (20), which is arranged in the interior of the storage container (1), is preceded by a screw (15) for conveying and dosing the fuel to the reception opening (19).

2. A device according to claim 1, **characterized in that** the screw (15) is at least partially surrounded by a guide tube (13) reaching into the interior of the storage container (1).

3. A device according to claim 2, **characterized in that** the screw (15) projects out of the guide tube (13) into the interior of the storage container (1) over a portion of its length, for instance, at least one third of its length.

4. A device according to claim 2 or 3, **characterized in that** a drive or a shaft (16) for the screw (15) is guided through the guide tube (13) and a motor (17) for driving the screw (15) is arranged outside the storage container (1).

5. A device according to any one of claims 2 to 4, **characterized in that** the reception opening (19) of the suction duct (20) is connected to the guide tube (13) and the introduction of fuel into the suction duct (20) takes place immediately on the end of the screw (15) arranged within the guide tube (20).

6. A device according to claim 5, **characterized in that** an air supply opening (23) for delivering and entraining fuel from the screw (15) into the reception opening (19) of the suction duct (20) opens in the region of the reception opening (19) of the suction duct (20).

7. A device according to any one of claims 1 to 6, **characterized in that** the screw (15) is mounted on the suction duct (20) and/or the guide tube (13) in an adjustable manner and, in particular, a height-adjustable manner.

8. A device according to any one of claims 1 to 7, **characterized in that** the screw (15) is movably coupled with the suction duct (20) and/or the guide tube (13).

9. A device according to any one of claims 2 to 8, **characterized in that** the suction duct (20) and, optionally, the air supply duct (22) are hinged or fixed to the guide tube (13) in the region of the reception opening (19) of the suction duct (20).

10. A device according to any one of claims 1 to 9, **characterized in that** the extraction device (4) comprising the suction duct (20), the screw (15) and the air supply duct (22) is detachably or removably arranged or fixed, in particular, in a central region of the upper cover surface of the container (1).

11. A device according to claim 10, **characterized in that** the fixation of the extraction device (4) on the container (1) is realized via a plate-shaped lid (3) of the container (1), which, in addition, comprises at least one filling or charging opening (11) for the introduction of fuel into the storage container (1).

12. A device according to any one of claims 1 to 11, **characterized in that** the storage container (1), in its bottom region, comprises particularly plate-shaped fixtures (2) tapering in a funnel-shaped or frustoconical manner from outer peripheral wall portions to substantially the center (27) of the bottom of the container (1).

13. A device according to claim 12, **characterized in that** the screw (15) is arranged in the region of the depressed center (27), particularly a sump, of the bottom of storage container (1).

14. A device according to any one of claims 1 to 13, **characterized in that** the storage container (1) is formed of a plastics material in a manner known per se.

15. A device according to any one of claims 1 to 14, **characterized in that** the storage container (1) in its interior is designed to comprise a stiffening means.

16. A device according to any one of claims 1 to 15, **characterized in that** the storage container (1) is a container that can be buried in the soil in a manner known per se.

## Revendications

1. Système servant à recevoir et/ou à conserver et à prélever du matériau de chauffage solide pouvant s'écouler, en particulier des boulettes de bois, comportant un réservoir de stockage (1) pour le matériau de chauffage et un dispositif de prélèvement (4) prévu au niveau du réservoir de stockage (1) et/ou dans le réservoir de stockage (1), lequel dispositif de prélèvement présente au moins une conduite d'enlèvement (20), en particulier une conduite d'aspiration pour l'enlèvement et le transport du matériau de chauffage depuis le réservoir de stockage (1) vers un réservoir intermédiaire ou un dispositif de chauffage, et au moins une ouverture d'amenée (11) pour amener du matériau de chauffage dans le réservoir de stockage (1), **caractérisé en ce qu'**une vis sans fin (15) servant à transporter et/ou à doser du matériau de chauffage vers l'ouverture de réception (19) est montée en amont d'une ouverture de réception (19) de la conduite d'aspiration (20) disposée à l'intérieur du réservoir de stockage (1).

2. Système selon la revendication 1, **caractérisé en ce que** la vis sans fin (15) est entouré au moins partiellement d'un tube conducteur (13) plongeant dans l'intérieur du récipient de stockage (1).

3. Système selon la revendication 2, **caractérisé en ce que** la vis sans fin (15) dépasse d'une partie de sa longueur, par exemple d'au moins un tiers de sa longueur, du tube conducteur (13) dans l'intérieur du réservoir de stockage (1).

4. Système selon la revendication 2 ou 3, **caractérisé en ce qu'**un moteur d'entraînement et/ou un arbre (16) pour la vis sans fin (15) est guidé à travers le tube conducteur (13), et **en ce qu'**un moteur (17) servant à entraîner la vis sans fin (15) est disposé à l'extérieur du réservoir de stockage (1).

5. Système selon l'une quelconque des revendications 2 à 4, **caractérisé en ce que** l'ouverture de réception (19) de la conduite d'aspiration (20) est raccordée au tube conducteur (13), et **en ce qu'**une réception du matériau de chauffage se produit dans la conduite d'aspiration (20) directement au niveau de l'extrémité de la vis sans fin (15) disposée dans le tube conducteur (13).

6. Système selon la revendication 5, **caractérisé en ce que** dans la zone de l'ouverture de réception (19) de la conduite d'aspiration (20), une ouverture d'amenée d'air (23) servant au transfert et à l'apport de matériau de chauffage par la vis sans fin (15) débouche dans l'ouverture de réception (19) de la conduite d'aspiration (20).

7. Système selon l'une quelconque des revendications 1 à 6, **caractérisé en ce que** la vis sans fin (15) est logée de manière à pouvoir être ajustée, en particulier de manière à pouvoir être ajustée en hauteur au niveau de la conduite d'aspiration (20) et/ou du tube conducteur (13).

8. Système selon l'une quelconque des revendications 1 à 7, **caractérisé en ce que** la vis sans fin (15) est couplée à la conduite d'aspiration (20) et/ou au tube conducteur (13) de manière mobile.

9. Système selon l'une quelconque des revendications 2 à 8, **caractérisé en ce que** la conduite d'aspiration (20) et le cas échéant la conduite (22) servant à amener de l'air dans la zone de l'ouverture de réception (19) de la conduite d'aspiration (20) est articulée et/ou fixée au niveau du tube conducteur (13).

10. Système selon l'une quelconque des revendications 1 à 9, **caractérisé en ce que** le dispositif de prélèvement (4) comportant la conduite d'aspiration (20), la vis sans fin (15) ainsi que la conduite d'amenée d'air (22) est disposé et/ou fixé de manière amovible et/ou séparable en particulier dans la zone centrale de la surface de recouvrement du réservoir (1).

11. Système selon la revendication 10, **caractérisé en ce que** la fixation du dispositif de prélèvement (4) au niveau du réservoir (1) se produit par l'intermédiaire d'un couvercle (3) en forme de plaque du réservoir (1), lequel couvercle présente en outre au moins une ouverture de remplissage et/ou de déchargement (11) servant à apporter du matériau de chauffage dans le réservoir de stockage (1).

12. Système selon l'une quelconque des revendications 1 à 11, **caractérisé en ce que** le réservoir de stockage (1) présente en particulier dans son fond des éléments encastrés en forme de plaque (2), lesquels se rétrécissent en forme d'entonnoir et/ou en forme de cône tronqué en partant des zones de paroi périphérique extérieures essentiellement en direction du centre (27) du fond du réservoir (1).

13. Système selon la revendication 12, **caractérisé en ce que** la vis sans fin (15) est disposée dans la zone du centre (27) profond, en particulier dans une citerne, du fond du réservoir de stockage (1).

14. Système selon l'une quelconque des revendications 1 à 13, **caractérisé en ce que** le réservoir de stockage (1) est réalisé à partir d'une matière plastique d'une manière connue en soi.

15. Système selon l'une quelconque des revendications 1 à 14, **caractérisé en ce que** le réservoir de stockage (1) est réalisé à l'intérieur d'une pièce de renforcement.

16. Système selon l'une quelconque des revendications 1 à 15, **caractérisé en ce que** le réservoir de stockage (1) est un réservoir pouvant être logé dans la terre d'une manière connue en soi.
